# EUROPEAN PATENT SPECIFICATION

(11) **EP 2 803 536 B1**
(45) Date of publication and mention of the grant of the patent: **21.09.2016**
(21) Application number: 13002569.5
(22) Date of filing: 16.05.2013
(51) Int. Cl.: B60R 19/20

(54) **Passenger car and airbag device**
Personenkraftfahrzeug mit Gassackvorrichtung
Véhicule avec sac gonflable

(43) Date of publication of application: 19.11.2014
(73) Proprietor: Autoliv Development AB, 447 83 Vårgårda (SE)
(72) Inventor: Karszt, Norbert, 85716 Lohhof (DE); Reiter, Thomas, 85256 Vierkirchen (DE); Reichmann, Christoph, 76275 Ettlingen (DE)
(74) Representative: Schön, Thilo

(56) References cited:
- EP-A1- 1 698 526
- WO-A1-2004/024514
- WO-A2-2004/108477
- FR-A- 1 407 642
- JP-A- 2005 112 210
- US-A1- 2005 087 998

## Description

The invention relates to an airbag device according to claim 1.

Small and lightweight passenger cars have a variety of advantages in relation to traditional large and heavy passenger cars. First of all, a lightweight passenger car is more energy-efficient during its production and, of course, also during its operation. Second, a small passenger car uses less "public space" than a large passenger car. This is especially important in urban areas. Because of these aspects and because of the fact that a passenger car is rarely occupied by more than two persons, there is a tendency to develop small and lightweight passenger cars, especially for the use in urban areas. It is expected that small passenger cars will play an important role particularly in the field of electro-mobility.

Of course, it is desired that a small passenger car provides a high degree of safety for its occupants when the small passenger car is involved in an accident. In this point, a small passenger car has (if no additional measures are taken) a structural disadvantage in relation to a larger passenger car, namely its small dimensions. In other words: The distance of a person to be protected inside the small passenger car to the outer periphery of the car is small, making it difficult to avoid that a structural element of the small passenger car moving to the inside because of an impacting object hits and thus hurts a person inside the small passenger car.

The basic idea is to provide an oblong, especially hose-type, airbag which is located outside the passenger compartment in such a way that the external dimensions of the passenger car rise when the airbag is filled with gas from an inflator and thus expands.

So, the passenger car "grows" in case of an accident and thus shows the advantages of a small-sized car in the normal operation, but gives the protection of a bigger car.

The airbag used for this purpose has a different purpose than a traditional airbag located inside the passenger compartment: The airbag located inside the passenger compartment usually has the task to softly catch the passenger such that energy can be dissipated. In the case of an "external" airbag according to the invention, the airbag should be very hard and usually no ventilation should be given. In order to achieve this, the inner pressure reached inside the airbag must be quite high and should preferably reach more than 10 bars. In order to achieve this without making the airbag heavy and/or expensive, the airbag comprises a woven structure and is preferably made out of a fire hose or similar type of hose which might be coated on the inside in order to improve the gas-tightness.

The generic WO 2004/024514 A1 shows an airbag device according to the preamble of claim 1 with an oblong airbag with a woven structure. The airbag is a hose whose initially open ends are closed, either by closing seams or by metal clamps. A gas generator is completely located inside the gas space enclosed by the airbag.

If the airbag is made in this way, various measures must be taken in order to make sure that the airbag remains intact when filled by high pressure. So, it is the object of the present invention to provide an airbag device whose airbag is being made from a hose whose initially open ends are closed and which can withstand a high internal pressure, especially a pressure of 10 to 20 bars.

This task is solved by an airbag device according to claim 1.

In this airbag device, the airbag has an oblong shape and shows a woven structure. The airbag is made from a hose, that means that its ends are initially open. These open ends are closed, preferably by closing seams. In order to prevent the closing seams from tearing a first sleeve block is mounted on the first end and a second sleeve block is mounted on the second end. The sleeve blocks each comprise two - preferably parallel or nearly parallel - side walls, such that the end sections with the closing seams are housed between the walls. So, the airbag can not expand freely to the closing seams and this leads to a strong reduction of the forces acting on the closing seams.

Since the airbag made in this way (especially when made from a section of a fire hose or a similar structure) tends to shorten during deployment, a mounting element comprising a deformable section is provided. This mounting element can especially be a bent sheet metal part. Additionally at least one fixing element, especially a hook, is provided that extends from the sleeve block or from the mounting element, said fixing element fixing the sleeve block to a structural element of the vehicle when the airbag device is in its non-activated state and de-attaching from said structural element when the airbag deploys.

Further preferred embodiments and advantages result from the further subclaims and from the preferred embodiments described hereinafter with reference to the figures.

The invention will now be described in detail in view of a preferred embodiment with reference to the figures. The figures show:
- Figure 1: a hose and a gas generator unit in a schematic perspective representation,
- Figure 2: the hose of Figure 1 after the gas generator has been inserted into the hose in a plan view,
- Figure 3: what is shown in Figure 2 after a folding step has been performed,
- Figure 4: what is shown in Figure 3 after two closing seams have been applied,
- Figure 5: what is shown in Figure 4 after mounting holes have been punched into the end sections of the airbag,
- Figure 6: what is shown in Figure 5 and two sleeves,
- Figure 7: a sleeve block in a perspective view,
- Figure 8: a mounting element in a perspective view,
- Figure 9: the mounting element of Figure 8 in a cut along plain E-E in Figure 8,
- Figure 10: a complete airbag device,
- Figure 11: a part of the airbag device of Figure 10 viewed from a different angle,
- Figure 12: an end section of the airbag device of Figure 11, mounted to a vehicle structure in a representation according to figure 9,
- Figure 13: what is shown in Figure 12 after deployment of the airbag,
- Figure 14: an example of how the airbag device of Figure 11 can be used in a very schematic representation and
- Figure 15: what is shown in Figure 14 after deployment of the airbag.

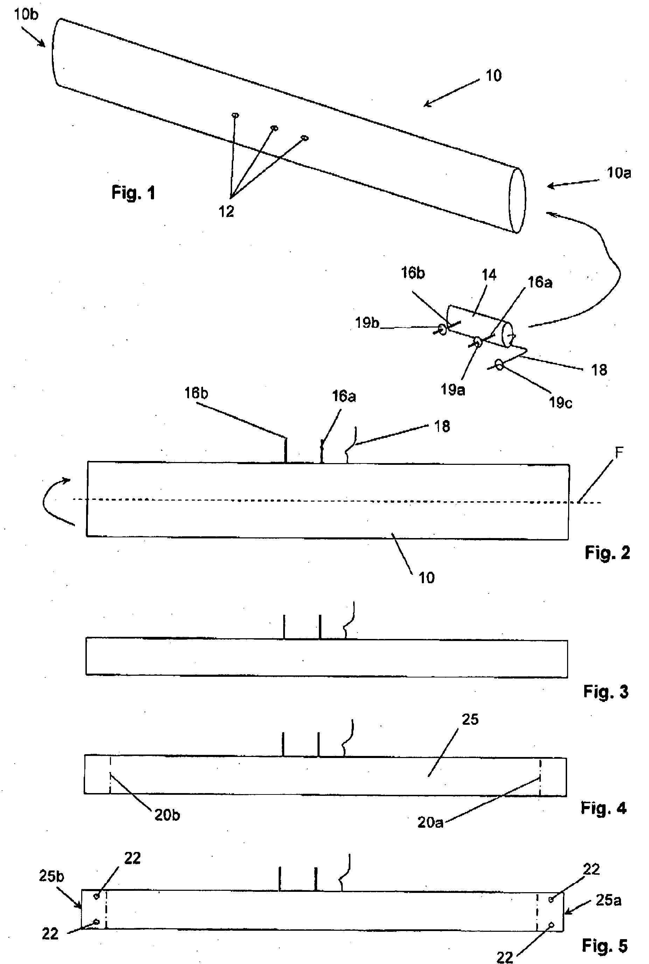

Figure 1 shows a hose 10. This hose extends from a first end 10a to a second end 10b. This hose is seamlessly woven as is generally known, for example from fire hoses. The hose can be coated on the inside (for example with silicone) in order to enhance its gas-tightness. The hose 10 can have a typical length of between 50 cm to 2 m and has typically a circumference of 30 to 70 cm. Holes 12 (in the embodiment shown: 3 holes) are provided in the lateral surface of the hose, preferably in a middle section.

Figure 1 further shows a gas generator unit being comprised of a gas generator 14 serving as inflator, studs 16a, 16b extending from the lateral surface of the cylindrical gas generator 14 and an ignition wire 18 also extending from the gas generator 14. Sealing discs 19a-c can be provided on the studs and the ignition wire 18 respectively.

In the first mounting step as is shown in Figure 2, the gas generator 14 is inserted into the hose 10 via the first end 10a or the second end 10b. After this mounting step is finished, the studs 16a, b and the ignition wire 18 extend through the holes 12 with the sealing discs remaining inside the hose 10. In this stadium, external sealing discs can be applied on the studs and the ignition wire; but this is not shown in the figures.

Next, the hose 10 is folded in half along a folding line F extending from the first end 10a the second end 10b.

In the next step, as is shown in Figure 4, closing seams are applied to the hose 10 near the first end 10a and the second end 10b respectively. Because of these closing seams 20a, 20b a closed gas space is created. In some embodiments alternative closing techniques like gluing or welding may be applied, but sewing is at present the preferred way of closing the ends of the hose.

It would also be possible to apply the closing seams first and to fold the airbag after the sewing. It needs also to be mentioned, that embodiments without a folding are (although not preferred) possible.

In the next step, as is shown in Figure 5, mounting holes 22 are punched, drilled or cut into the two end sections of the oblong airbag 22 being created by closing the folded hose 10. The mounting holes 22 all lie outside the gas space (this means they are located between the respective closing seam 20a, b and the edge of the airbag). In the embodiment shown, two mounting holes 22 are provided on each side.

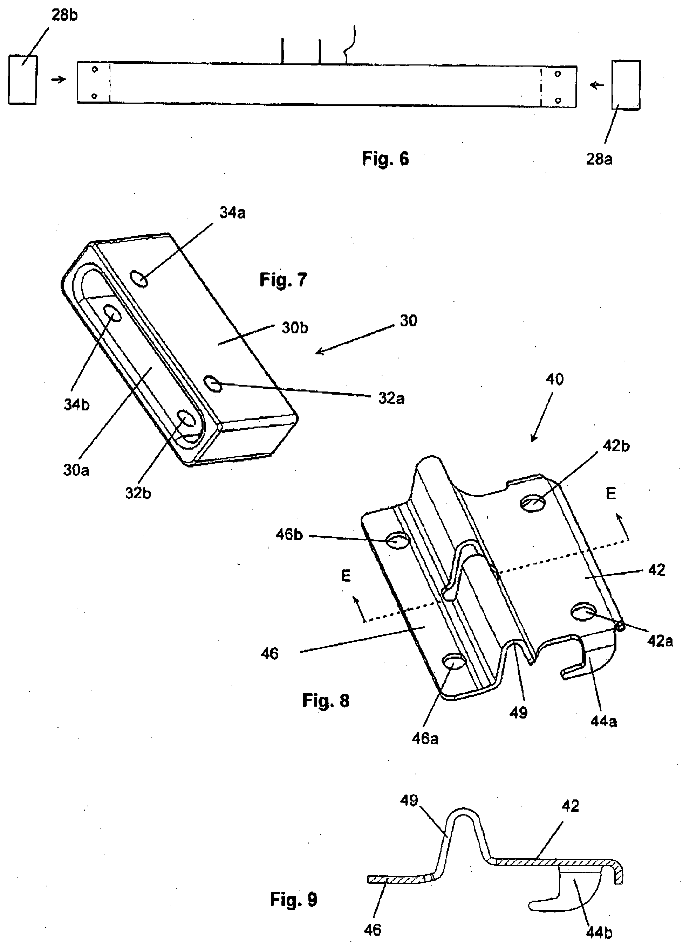

In the next step, as is shown in Figure 6, a sleeve 28a, 28b is applied onto each end section of the oblong airbag 25. These sleeves 28a, 28b should show some elasticity and can be made of strong rubber material, but also of a woven material.

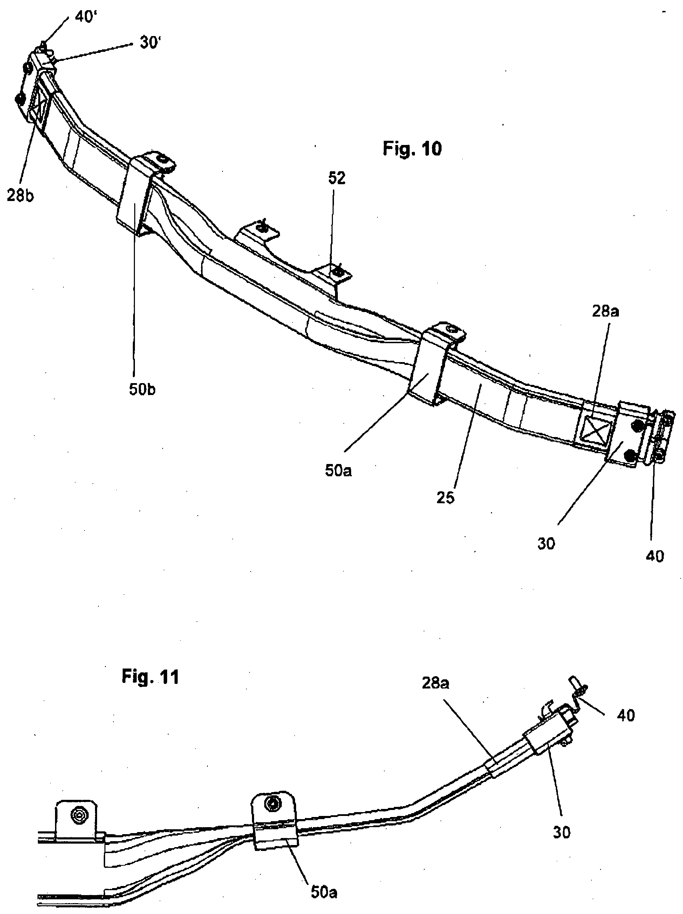

Figure 7 shows a sleeve block 30. As will be seen later with reference to Figure 10, two such sleeve blocks 30, 30' are provided; one on each end section of the oblong airbag 25 when the airbag device is in its assembled state. Since both sleeve blocks 30, 30' are identically formed, reference is only made to sleeve block 30. This sleeve block 30 has a basically O-shaped, closed cross section with two parallel walls 30a, 30b. The sleeve block 30 is made of a sturdy and rigid material, preferably of steel, but in some embodiments aluminum or plastic, especially fibre-reinforced plastic, may also be used. Two pairs of through-holes are provided in the parallel walls of the sleeve block 30. The first through-holes 32a, 32b form a first pair of through-holes with one of the first through-holes being provided in the first side wall 30a and the other first through-hole 32b being provided in the second side wall 30b. The two first through-holes align with each other. The second through-holes 34a, 34b form a second pair of through-holes in the same way the first through-holes form a first pair of through-holes.

Figures 8 and 9 show a mounting element 40 which is in the assembled state mounted to the sleeve block 30. This mounting element 40 is a bent sheet metal part and comprises three sections, namely a block-side section 42, a vehicle-side section 46 and a deformable section 49 connecting the block-side section 42 and the vehicle-side section 46. The deformable section 49 is basically U- or V-shaped. In the block-side section 42, two block-side mounting holes 42a, 42b are provided. In the assembled state, the first block-side mounting hole 42a is in alignment with the first through-holes 32a, 32b and the second block-side mounting holes 42b is in alignment with the second through-holes 34a, 34b. In the vehicle-side section 46 vehicle-side mounting holes 48a, 48b are provided such that the vehicle-side section 46 can be connected to a vehicle structure, for example by means of rivets, bolts or screws. Two hooks 44a, 44b extend from the block-side section 42 and point towards the vehicle-side section 46.

Figures 10 and 11 show the completely assembled state of the airbag device. One can see that the two end sections of the oblong airbag 25 are enclosed by the sleeves 28a, b and that they extend into their respective sleeve blocks 30, 30', which are connected with their respective mounting element 40, 40'. One can also see a mounting bracket 52 for the gas generator and additional fixation elements 50a, 50b which have an enclosing section enclosing the package of the oblong airbag 25. The enclosing sections can be broken by the deploying airbag such that they are only active in the resting state of the airbag device.

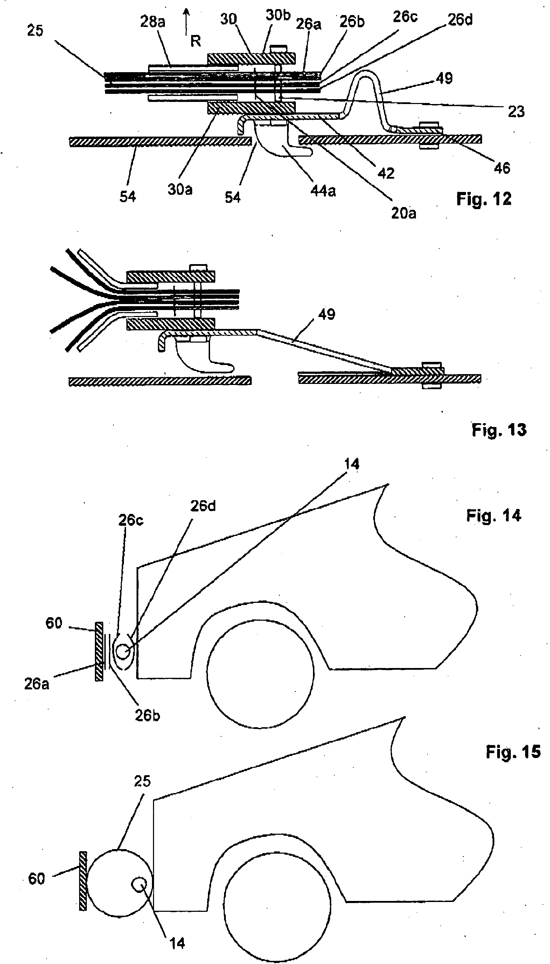

Figure 12 shows a schematic cut through an end section of the airbag device when it is mounted to a vehicle structure 54. One can see that the four layers 26a - 26d of the oblong airbag 25 and the two layers of the sleeve 28a are located between the two side walls 30a, 30b of the sleeve block 30. As has already been pointed out, the inner surfaces of these side walls are preferably parallel to one another, but there is no need of an absolute parallelity. But, it is important that the surface normals of these two inner surfaces basically point in opposing directions.

The vehicle-side section 46 of the mounting element 40 is screwed or riveted to the vehicle structure 54 (a structural element of the vehicle, for example a part of the frame or an other basically rigid part). The sleeve block 30, the block-side section 42 of the mounting element 40 and the airbag 25 are connected to each other by means of bolts or screws 23 extending through the mounting holes 22, the through-holes 32a, 32b, 34a, 34b and the block-side mounting holes 42a, 42b. The hooks 44a, 44b are each held in a receiving aperture 56, such that the sleeve block 30 cannot move in direction R. The other end of the airbag device is of course mounted exactly the same way.

Figure 13 shows the situation when after the gas generator 14 had been triggered and the oblong airbag 25 deployed to its unfolded pressurized state. Because of this deployment, the oblong airbag 25 does not only expand in radial direction (this means that at least a middle section of the oblong airbag 25 returns to its original hose-shape), but the oblong airbag also contracts in axial direction, that means the distance between the first end 25a and the second end 25b decreases. Because of this shortening, the oblong airbag 25 applies a force to the sleeve blocks 30, 30' towards the middle of the oblong airbag 25. The sleeve blocks 30, 30' transmit this force to their mounting element 40, 40', leading to a deformation (namely a stretching) of the deformable sections (shown in Figure 13 is the stretched deformable section 49). Due to this deformation, the sleeve block 30 moves to the inside, leading it to a disengagement of the hooks from their respective receiving apertures 56. Due to this, the oblong airbag 25 can contract in axial direction (when expanding in radial direction) without causing damage to the airbag, the sleeve blocks 30 or the vehicle structure.

Another very important thing can be seen from Figure 13, namely how the sleeve block 30 protects the closing seam 20a. Because the layers 26a - 26d run parallel between the two side walls 30a, 30b of the sleeve block 30 and the space between these two side walls is limited, the layers 26a - 26d cannot move very far away from each other in the area of the closing seam 20a, which leads to a strong limitation of the peel force acting on the closing seam 20a, making it possible that the closing seam 20a remains intact despite the very high forces. At least in this situation, the layers 26a - 26d are clamped between the side walls of the sleeve block 30, so that the sleeve blocks 30, 34' could also be referred to as "clamping blocks".

The sleeves 28a, 28b additionally help keeping the layers of the oblong airbag intact, especially the sleeves protect the outer layers from being damaged by the sleeve blocks 30, 30'.

Figures 14 and 15 show an application of the airbag device just described, namely as a part of an active bumper. The airbag device is mounted at the rear or at the front end of the vehicle, wherein the oblong airbag 25 basically extends transversally to the moving direction of the vehicle. The oblong airbag 25 is covered by a covering element 60 which is detachably connected to the vehicle, for example via break-way snap connectors. The covering element 60 may be connected to the airbag 25. When the gas generator 14 is triggered, the oblong airbag 25 expands such that its radial dimension rises (it "thickens"). This deployment in radial direction makes the vehicle longer and moves the covering element 60 away from the car body, such that during a collision the outer dimension of the vehicle is enlarged. It is preferred to trigger the gas generator based on the signal of a proximity sensor (not shown in the figures).

In alternative embodiments, the covering element may be constructed like "traditional covers of frontal airbags inside the vehicle, namely with a door showing a hinge and being partially surrounded by a slit line. To provide a covering element is generally preferred for aesthetical reasons and in order to protect the airbag from environmental influences.

In an other important application, the airbag device is located on the side of the vehicle, especially on a side door with the airbag extending basically parallel to the longitudinal direction of the vehicle.

### List of reference numbers

- 10: hose
- 10a: first end
- 10b: second end
- 12: holes in the lateral surface
- 14: gas generator
- 16a,b: stud
- 18: ignition wire
- 19a,b,c: sealing disc
- 20a,b: closing seam
- 22: mounting hole
- 23: bolt or screw
- 25: oblong airbag
- 25a: first end
- 25b: second end
- 16a-b: layer
- 28a,b: sleeve
- 30,30': sleeve block
- 30a,b: side wall
- 32a,b: first through-holes
- 34a,b: second through-holes
- 40,40': mounting element
- 42: block-side section
- 42a,b: block-side mounting holes
- 44a,b: hooks
- 46: vehicle-side section
- 48a,b: vehicle-side mounting holes
- 49: deformable section
- 50a,b: fixation element
- 52: mounting bracket for gas generator
- 54: vehicle structure
- 56: receiving aperture
- 60: covering element
- F: folding line

## Claims

1. Airbag device, said airbag arrangement comprising:
- an oblong airbag (25) with a woven structure, said airbag being a hose (10) whose initially open ends are closed, preferably by closing seams (20a, 20b), and said oblong airbag (25) extending from a first end to a second end (25a, 25b),
- an inflator being in fluid communication with the gas space encompassed by the airbag (25), said inflator preferably being a gas generator (14) being completely located inside the gas space,
- a first sleeve block (30) being mounted on a first end section proximate the first end (25a) of the airbag (25), and
- a second sleeve block (30') being mounted on a second end section proximate the second end (25b) of the airbag, and **characterized in that** from at least one sleeve block (30, 30') a mounting element (40,40') extends, said mounting element (40, 40') having a block side section (42) connected to the sleeve block (30, 30') and a vehicle side section (46) for mounting the airbag device to a structural element of a vehicle, said mounting element (40,40') comprising a deformable section (49), which is especially in form of a bent sheet metal part, which connects the block side section (42) and the vehicle side section (46),
and **in that** additionally at least one fixing element, especially a hook (44a, 44b), extends from the sleeve block (30, 30') or from the block side section (42) of the mounting element (40, 40'), said fixing element being configured for fixing the sleeve block (30, 30') to a structural element of the vehicle when the airbag device is in its non-activated state and de-attaching from said structural element when the airbag deploys.

2. Airbag device according to one of claim 1, **characterised in that** the airbag (25) is folded at least one time along a folding line (F) running from the first end (25a) to the second end (25b) of the airbag (25).

3. Airbag device according one of the preceding claims, **characterised in that** near each end of the airbag an elastic sleeve (28a, 28b) is located on the airbag (25).

4. Airbag device according to claim 3, **characterised in that** the elastic sleeve (28a, 28b) extends into the sleeve block (30, 30').

5. Airbag device according to one of the preceding claims, characterised that at least one additional mounting element (40a, 40b) is present between the first and the second sleeve block (30, 30'), said additional mounting element (40a, 40b) comprising a breakable enclosing section encompassing the airbag (25) at least in sections.

6. Airbag device according to one of the preceding claims, **characterised in that** the hose (10) comprises a woven hose that is coated on the inside.

7. Airbag device according to one of the preceding claims, **characterised in that** the hose (10) is seamless.

8. Airbag device according to one of the preceding claims, **characterised in that** at least one stud, bolt, or screw (23) extends through an end section of the airbag and connects the end section to its sleeve block (30, 30'), wherein the stud and the gas space are separated by the closing seam (20a, 20b).

## Patentansprüche

1. Gassackvorrichtung, wobei die Gassackanordnung Folgendes umfasst:
- einen länglichen Gassack (25) mit einer gewebten Struktur, wobei der Gassack ein Schlauch (10) ist, dessen anfangs offene Enden geschlossen sind, vorzugsweise mit Verschlussnähten (20a, 20b), und wobei der längliche Gassack (25) von einem ersten Ende zu einem zweiten Ende (25a, 25b) verläuft,
- einen Gasgenerator, der mit dem Gasraum in Fluidverbindung steht, den der Gassack (25) einschließt, wobei der Gasgenerator vorzugsweise ein vollständig in dem Gasraum angeordneter Gasgenerator (14) ist,
- einen ersten Hülsenstopper (30), der an einem ersten Endabschnitt nahe dem ersten Ende (25a) des Gassacks (25) montiert ist, und
- einen zweiten Hülsenstopper (30'), der an einem zweiten Endabschnitt nahe dem zweiten Ende (25b) des Gassacks montiert ist, und
**dadurch gekennzeichnet,**
**dass** von mindestens einem Hülsenstopper (30, 30') aus ein Befestigungselement (40, 40') verläuft, wobei das Befestigungselement (40, 40') einen Stopperseitenabschnitt (42) aufweist, der mit dem Hülsenstopper (30, 30') verbunden ist, und einen Fahrzeugseitenabschnitt (46) zum Befestigen der Gassackvorrichtung an einem Konstruktionselement eines Fahrzeugs, wobei das Befestigungselement (40, 40') einen verformbaren Abschnitt (49) umfasst, der insbesondere die Form eines gebogenen Blechteils aufweist, das den Stopperseitenabschnitt (42) und den Fahrzeugseitenabschnitt (46) verbindet,
und dadurch, dass sich zusätzlich mindestens ein Fixierelement, insbesondere ein Haken (44a, 44b), von dem Hülsenstopper (30, 30') oder von dem Stopperseitenabschnitt (42) des Montageelements (40, 40') aus erstreckt, wobei das Fixierelement so ausgelegt ist, dass es den Hülsenstopper (30, 30') an einem Konstruktionselement des Fahrzeugs fixiert, wenn sich die Gassackvorrichtung in ihrem nicht ausgelösten Zustand befindet, und ihn von dem Konstruktionselement löst, wenn sich der Gassack entfaltet.

2. Gassackvorrichtung nach Anspruch 1, **dadurch gekennzeichnet, dass** der Gassack (25) mindestens einmal entlang einer Faltlinie (F) gefaltet ist, die von dem ersten Ende (25a) zum zweiten Ende (25b) des Gassacks (25) verläuft.

3. Gassackvorrichtung nach einem der vorhergehenden Ansprüche, **dadurch gekennzeichnet, dass** sich eine elastische Hülse (28a, 28b) an dem Gassack (25) nahe jedem Ende des Gassacks befindet.

4. Gassackvorrichtung nach Anspruch 3, **dadurch gekennzeichnet, dass** die elastische Hülse (28a, 28b) in den Hülsenstopper (30, 30') hinein verläuft.

5. Gassackvorrichtung nach einem der vorhergehenden Ansprüche, **dadurch gekennzeichnet, dass** mindestens ein zusätzliches Befestigungselement (40a, 40b) zwischen dem ersten und dem zweiten Hülsenstopper (30, 30') vorhanden ist, wobei das zusätzliche Befestigungselement (40a, 40b) einen zerstörbaren Umhüllungsabschnitt umfasst, der den Gassack (25) zumindest abschnittsweise umgibt.

6. Gassackvorrichtung nach einem der vorhergehenden Ansprüche, **dadurch gekennzeichnet, dass** der Schlauch (10) einen auf der Innenseite beschichteten, gewebten Schlauch umfasst.

7. Gassackvorrichtung nach einem der vorhergehenden Ansprüche, **dadurch gekennzeichnet, dass** der Schlauch (10) nahtlos ist.

8. Gassackvorrichtung nach einem der vorhergehenden Ansprüche, **dadurch gekennzeichnet, dass** mindestens ein Bolzen, eine Bolzenschraube oder Schraube (23) durch einen Endabschnitt des Gassacks verläuft und den Endabschnitt mit seinem Hülsenstopper (30, 30') verbindet, wobei der Bolzen und der Gasraum durch die Verschlussnaht (20a, 20b) getrennt sind.

## Revendications

1. Dispositif de sac gonflable, ledit agencement de sac gonflable comprenant :
- un sac gonflable oblong (25) doté d'une structure tissée, ledit sac gonflable étant un tube (10) dont les extrémités initialement ouvertes sont fermées, de préférence par des coutures de fermeture (20a, 20b), et ledit sac gonflable oblong (25) s'étendant d'une première extrémité à une seconde extrémité (25a, 25b),
- un gonfleur qui est en communication fluidique avec l'espace pour le gaz entouré par le sac gonflable (25), ledit gonfleur étant de préférence un générateur de gaz (14) situé entièrement à l'intérieur de l'espace pour le gaz,
- un premier bloc manchon (30) qui est monté sur une première partie d'extrémité proche de la première extrémité (25a) du sac gonflable (25), et
- un second bloc manchon (30') qui est monté sur une seconde partie d'extrémité proche de la seconde extrémité (25b) du sac gonflable, et
**caractérisé**
**en ce qu'**un élément de montage (40, 40') s'étend à partir d'au moins un bloc manchon (30, 30'), ledit élément de montage (40, 40') ayant une partie côté bloc (42) reliée au bloc manchon (30, 30') et une partie côté véhicule (46) destinée à monter le dispositif de sac gonflable sur un élément structural d'un véhicule, ledit élément de montage (40, 40') comprenant une partie déformable (49), qui est en particulier sous la forme d'une pièce de tôle métallique courbée, qui relie la partie côté bloc (42) et la partie côté véhicule (46),
et **en ce qu'**en outre au moins un élément de fixation, en particulier un crochet (44a, 44b), s'étend à partir du bloc manchon (30, 30') ou de la partie côté bloc (42) de l'élément de montage (40, 40'), ledit élément de fixation étant configuré pour fixer le bloc manchon (30, 30') à un élément structural du véhicule quand le dispositif de sac gonflable est dans son état non activé et le détacher dudit élément structural quand le sac gonflable se déploie.

2. Dispositif de sac gonflable selon la revendication 1, **caractérisé en ce que** le sac gonflable (25) est plié au moins une fois le long d'une ligne de pliage (F) s'étendant de la première extrémité (25a) à la seconde extrémité (25b) du sac gonflable (25).

3. Dispositif de sac gonflable selon l'une des revendications précédentes, **caractérisé en ce qu**'un manchon élastique (28a, 28b) est situé sur le sac gonflable (25) près de chaque extrémité du sac gonflable.

4. Dispositif de sac gonflable selon la revendication 3, **caractérisé en ce que** le manchon élastique (28a, 28b) s'étend dans le bloc manchon (30, 30').

5. Dispositif de sac gonflable selon l'une des revendications précédentes, **caractérisé en ce qu**'au moins un élément de montage (40a, 40b) supplémentaire est présent entre le premier et le second bloc manchon (30, 30'), ledit élément de montage (40a, 40b) supplémentaire comprenant une partie d'enfermement pouvant être rompue entourant le sac gonflable (25) au moins sur certaines parties.

6. Dispositif de sac gonflable selon l'une des revendications précédentes, **caractérisé en ce que** le tube (10) comprend un tube tissé qui est revêtu sur l'intérieur.

7. Dispositif de sac gonflable selon l'une des revendications précédentes, **caractérisé en ce que** le tube (10) est sans couture.

8. Dispositif de sac gonflable selon l'une des revendications précédentes, **caractérisé en ce qu'**au moins une tige, un boulon ou une vis (23) s'étend à travers une partie d'extrémité du sac gonflable et relie la partie d'extrémité à son bloc manchon (30, 30'), la tige et l'espace pour le gaz étant séparés par la couture de fermeture (20a, 20b).
